(19) **Europäisches Patentamt**
**European Patent Office**
**Office européen des brevets**

(11) **EP 2 410 597 B1**

(12) **EUROPEAN PATENT SPECIFICATION**

(45) Date of publication and mention
of the grant of the patent:
**05.10.2016 Bulletin 2016/40**

(21) Application number: **10753679.9**

(22) Date of filing: **16.03.2010**

(51) Int Cl.:
*H01M 4/62* (2006.01)    *H01M 4/02* (2006.01)
*H01M 4/36* (2006.01)    *H01M 4/64* (2006.01)
*H01M 10/052* (2010.01)    *H01M 4/44* (2006.01)
*H01M 4/46* (2006.01)    *H01M 4/42* (2006.01)
*H01M 4/38* (2006.01)

(86) International application number:
**PCT/KR2010/001621**

(87) International publication number:
**WO 2010/107229 (23.09.2010 Gazette 2010/38)**

(54) **ELECTRODE BINDER FOR A SECONDARY BATTERY, AND SECONDARY BATTERY USING SAME**

ELEKTRODENBINDER FÜR EINE SEKUNDÄRBATTERIE UND SEKUNDÄRBATTERIE DAMIT

LIANT D'ÉLECTRODE POUR BATTERIE SECONDAIRE, ET BATTERIE SECONDAIRE L'UTILISANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.03.2009   KR 20090022143**

(43) Date of publication of application:
**25.01.2012   Bulletin 2012/04**

(73) Proprietor: **LG Chem, Ltd.**
**Youngdungpo-gu**
**Seoul 150-721 (KR)**

(72) Inventors:
• **CHOI, Seungyoun**
**Daejeon 305-340 (KR)**
• **KIM, Jeyoung**
**Daejeon 305-761 (KR)**
• **OH, Byung Hun**
**Daejeon 302-120 (KR)**
• **Lee, Yongju**
**Daejeon 305-727 (KR)**
• **Uhm, Insung**
**Daejeon 305-380 (KR)**

(74) Representative: **Hoffmann Eitle**
**Patent- und Rechtsanwälte PartmbB**
**Arabellastraße 30**
**81925 München (DE)**

(56) References cited:
**EP-A1- 0 964 464        WO-A1-2008/030001**
**JP-A- 11 158 277        JP-A- 2006 216 371**
**KR-B1- 100 767 966        US-A1- 2007 065 720**
**US-A1- 2007 099 081        US-A1- 2007 141 469**

**Description**

BACKGROUND OF THE INVENTION

1. Field of the invention

The present invention relates to an electrode binder for a secondary battery, an electrode including the electrode binder, and the secondary battery including the electrode.

2. Description of the Prior Art

A lithium secondary battery uses materials capable of intercalating/deintercalating lithium ions, as a cathode and an anode, and is fabricated by filling an organic electrolyte or a polymer electrolyte between the cathode and the anode. Also, the lithium secondary battery generates electrical energy by oxidation and reduction during intercalation and deintercalation of lithium ions at the anode and the cathode.

At present, as an electrode active material constituting an anode of a lithium secondary battery, a carbonaceous material is mainly used. However, in order to further improve the capacity of the lithium secondary battery, it is necessary to use a high capacity electrode active material. It has recently been known that metallic materials, such as silicon, tin, or the like, can reversibly store and discharge a large amount of lithium through a compound formation reaction with lithium. Accordingly, much research on this has been conducted.

However, in a case of such metallic materials, a very significant change in the volume is caused through a reaction with lithium during charge/discharge. Thus, while the charge/discharge is repeated, an anode active material is separated from a current collector (e.g., Cu foil) or the mutual contact interface resistance in the anode active material is increased. This causes a problem in that the capacity is rapidly reduced by repeated cycles, and the cycle life is shortened.

Accordingly, in the fabrication of an electrode employing such metallic materials, it is important to employ a binder having a high adhesion force and high mechanical properties so that the metallic materials can stand against a significant change in a volume by charge/discharge.

In a case where a conventional binder for a graphite anode active material, that is, PVdF (polyvinylidene fluoride), SBR (styrene butadiene rubber), or the like, is used for a metallic material in its entirety, the interface between an active material and a binder and the inside of the binder are subjected to cracks (cohesive failure), and the active material is separated from a current collector (adhesive failure) during charge/discharge. Meanwhile, in a case where PI (poly imide) known to have a high adhesion force is used, the crack within an electrode is reduced while the cohesion force between a binder and a current collector is very strong. This causes a problem in that after charge/discharge, the shape of the electrode is deformed, in other words, the current collector is extended or wrinkled.

US 2007/099081 A1 relates to a non-aqueous electrolyte secondary battery including a positive electrode, a negative electrode, a separator interposed between the positive and negative electrodes, and a non-aqueous electrolyte. The negative electrode includes composite particles and a binder. Each of the composite particles includes: a negative electrode active material including an element capable of being alloyed with lithium; carbon nanofibers that are grown from a surface of the negative electrode active material; and a catalyst element for promoting the growth of the carbon nanofibers. The binder comprises at least one polymer selected from the group consisting of polyimide, polyamide imide, polyamide, aramid, polyarylate, polyether ether ketone, polyether imide, polyether sulfone, polysulfone, polyphenylene sulfide, and polytetrafluoroethylene.

EP 0 964 464 A1 relates to a binder for secondary battery using non-aqueous electrolyte which is soluble in usual organic solvents and does not swell in a non-aqueous electrolyte. As the binder, a copolymer comprising 50 to 80 % by mole of vinylidene fluoride, 17 to 50 % by mole of tetrafluoroethylene and less than 3 % by mole of a monomer copolymerizable therewith is used.

WO 2008/030001 A1 relates to an electrode mix comprising a mixture of a polyvinyl alcohol with polyvinyl pyrrolidone as a binder and a lithium secondary battery comprising the same. The electrode mix and lithium secondary battery are said to enable stable maintenance of adhesion between active materials and/or adhesion between the active material and current collector and reduction of volumetric changes of anode active materials during repeated charge/discharge cycles, through the use of a polymer having an improved elongation percentage while exhibiting very high adhesive strength, as a binder of an electrode mix.

US 2007/065720 A1 relates to a negative electrode for a lithium ion secondary battery including a negative electrode active material layer. The negative electrode active material layer contains a negative electrode active material capable of reversibly absorbing and desorbing lithium, and a binder. The binder comprises at least one polymer selected from the group consisting of polyacrylic acid and polymethacrylic acid, and the polymer comprises an acid anhydride group.

US 2007/141469 A1 relates to a lithium ion secondary battery including a positive electrode having at least a cathode active material and a binder, a negative electrode, an electrolyte, and a separator which are arranged between the positive electrode and the negative electrode, and in which an open circuit voltage per unit cell in a full charging state lies within (4.25V$\leq$voltage$\leq$6.00V). The cathode active material includes either a lithium-cobalt composite oxide expressed by a general formula: $Li_aCo_{1-x}Me_xO_{2-b}$ (Me denotes metal elements of at least one, two or more kinds selected from V, Cu, Zr, Zn, Mg, Al, and Fe; $0.9\leq a\leq1.1$; $0\leq x\leq0.3$; and $-0.1\leq b\leq0.1$) or a lithium-cobalt-nickel-manganese oxide expressed by a general formula: $Li_aNi_{1-x-y-z}Co_xMn_yMe_zO_{2-b}$ ($0.9\leq a\leq1.1$; $0<x<0.4$; $0<y<0.4$; $0<z<0.3$; and $-0.1\leq b\leq0.1$). The binder includes a polyacrylonitrile series resin.

SUMMARY OF THE INVENTION

Accordingly, the present invention has been made to solve the above-mentioned problems occurring in the prior art, and the present invention provides an electrode for a secondary battery, comprising an electrode binder which can improve a cohesion force with an active material within an electrode and an adhesion force with an electrode current collector, thereby inhibiting the separation of an electrode active material from the current collector and the deformation of the current collector.

Also, the present invention provides secondary battery, in which due to the inclusion of the electrode, the lifetime characteristic can be improved and an increase in an electrode thickness according to charge/discharge can be inhibited.

In accordance with an aspect of the present invention, there is provided an electrode for a secondary battery which comprises an electrode binder for a secondary battery, a metal(oid) electrode active material and an electrode current collector, wherein the electrode binder includes a polymer whose cohesion force with the metal(loid) electrode active material is equal to or more than 0.98 N/cm (100gf/cm), and adhesion force with the electrode current collector ranges from 0.00098 N/mm (0.1gf/mm) to 0.689 N/mm (70gf/mm), the metal(loid) electrode active material being capable of reversibly storing and discharging lithium, the polymer is polyacrylonitrile, the electrode is an anode.

In accordance with a further aspect of the present invention, there is provided a secondary battery including a cathode, an anode, a separator, and an electrolyte, wherein the cathode or the anode is an electrode for the secondary battery, which includes: the electrode binder for the secondary battery, according to the present invention; a metal(loid) electrode active material; and an electrode current collector.

BRIEF DESCRIPTION OF THE DRAWINGS

The above and other objects, features and advantages of the present invention will be more apparent from the following detailed description taken in conjunction with the accompanying drawings, in which:

FIG. 1 is a cross-sectional view illustrating a 180° peel test of Example 1;
FIG. 2 is an SEM image showing a cross-section of an anode of a secondary battery employing a polyacrylonitrile (PAN) binder, according to Example 2, in a state where the secondary battery is disassembled after 50 charge/discharge cycles;
FIG. 3 is an SEM image showing a cross-section of an anode of a secondary battery employing a polyvinylidene fluoride (PVdF) binder, according to Comparative Example 3, in a state where the secondary battery is disassembled after 50 charge/discharge cycles; and
FIG. 4 is an image showing an anode of a secondary battery employing a polyimide (PI) binder, according to Comparative Example 4, in a state where the secondary battery is disassembled after 50 charge/discharge cycles.

DETAILED DESCRIPTION OF THE EXEMPLARY EMBODIMENTS

Hereinafter, the present invention will be described with reference to the accompanying drawings.

An electrode binder for a secondary battery of the present invention includes a polymer whose cohesion force with a metal(loid) electrode active material is equal to or more than 0.98 N/cm (100gf/cm), and adhesion force with an electrode current collector ranges from 0.00098 N/mm (0.1gf/mm) to 0.689 N/mm (70gf/mm). Preferably, an electrode binder for a secondary battery of the present invention is a polymer having the above mentioned cohesion force and the adhesion force. Herein, the metal(loid) electrode active material is an electrode active material capable of reversibly storing and discharging lithium.

Also, in the electrode binder for the secondary battery of the present invention, the polymer whose cohesion force with a metal(loid) electrode active material is equal to or more than 0.98 N/cm (100gf/cm), and adhesion force with an electrode current collector ranges from 0.00098 N/mm (0.1gf/mm) to 0.689 N/mm (70gf/mm) may be used alone or in combination. Preferably, the metal(loid) electrode active material is a metal(loid) anode active material, the electrode current collector is an anode current collector, and the electrode binder for the secondary battery of the present invention is an anode binder for the secondary battery.

In the electrode binder for the secondary battery of the present invention, the adhesion force between the polymer and the electrode current collector preferably ranges from 0.00098 N/mm (0.1gf/mm) to 0.689 N/mm (70gf/mm), and more preferably ranges from 0.0491 N/mm (5gf/mm) to 0.491 N/mm (50gf/mm). When the adhesion force between the polymer and the electrode current collector is greater than 0.689 N/mm (70gf/mm), the electrode itself, including the current collector, is deformed by the volume expansion following charge/discharge of the metal(loid) electrode active material. In this case, due to deterioration of a lifetime characteristic, and electrode deformation, some problems on safety may be caused. Meanwhile, the adhesion force is less than 0.00098 N/mm (0.1gf/mm), and the electrode active material is separated from the current collector during charge/discharge cycles, which makes it impossible for the active material to be charged/discharged.

Also, in the electrode binder for the secondary battery of the present invention, the cohesion force between the polymer and the metal(loid) electrode active material is preferably equal to or more than 0.98 N/cm (100gf/cm), and more preferably ranges from 0.98 N/cm (100gf/cm) to 9800 N/cm (1,000,000gf/cm).

When the cohesion force between the polymer and the metal(loid) electrode active material is less than 0.98 N/cm (100gf/cm), cracks occur between the electrode active materials within the electrode during charge/discharge. Such cracks are deepened according to the repetition of cycles, and thereby the active materials become more distant from each other. Such a significant change in the contact interfaces between the active materials increases the resistance, which reduces the electrical conductivity within the electrode and thereby reduces a lifetime characteristic. Thus, after repeated cycles, the thickness of the electrode is significantly increased.

When the cohesion force between the polymer and the metal(loid) electrode active material is equal to or more than 0.98 N/cm (100gf/cm), cracks within the electrode are reduced, and thickness expansion of the electrode is inhibited. This improves the capacity and the lifetime characteristic. Also, there is an advantage in that it is easy to design a cell structure due to a small thickness increase ratio of the electrode, and the capacity per unit volume is increased after repeated cycles.

In the present invention, the polymer as the electrode binder for the secondary battery is a polymer whose cohesion force with a metal(loid) electrode active material is equal to or more than 0.98 N/cm (100gf/cm), and adhesion force with an electrode current collector ranges from 0.00098 N/mm (0.1gf/mm) to 0.689 N/mm (70gf/mm).

Especially, the polymer as the electrode binder for the secondary battery of the present invention is polyacrylonitrile. This is because polyacrylonitrile has a very high adhesion force, and does not require an additional high temperature heat treatment step for imidization, unlike polyimide, thereby improving the efficiency in the fabrication process of the electrode.

Such a polyacrylonitrile preferably has a weight average molecular weight within a range of 150,000 to 5,000,000, and more preferably has a weight average molecular weight within a range of 200,000 to 3,000,000, but the present invention is not limited thereto. When a polyacrylonitrile having a weight average molecular weight of less than 150,000 is used as an electrode binder, the adhesion force with the metal(loid) electrode active material may be weakened, and the electrode may be separated from the current collector due to the dissolution or swelling in a carbonate electrolyte. Also, when a polyacrylonitrile having a weight average molecular weight of greater than 5,000,000 is used as an electrode binder, the electrical resistance within the electrode is increased, and the viscosity of the slurry is increased. This may make it difficult to fabricate the electrode.

Specifically, when the weight average molecular weight of the polyacrylonitrile ranges from 200,000 to 3,000,000, the cohesion force with the metal(loid) electrode active material ranges from 7.85 N/mm (800gf/cm) to 19.62 N/mm (2000gf/cm), and the adhesion force with current collector ranges from 0.098 N/mm (10gf/mm) to 0.294 N/mm (30gf/mm). Thus, it is possible to configure a stable electrode, thereby improving the performance (a lifetime and a charge/discharge characteristic) of a secondary battery.

In the present invention, the metal(loid) electrode active material may include a conventional metal(loid) anode active material known in the art. For example, the metal(loid) electrode active material may include at least one kind selected from the group including (i) metals or metalloids selected from the group including Si, Al, Sn, Sb, Bi, As, Ge, Pb, Zn, Cd, In, Tl and Ga; (ii) oxides of the metals or the metalloids; (iii) alloys of the metals or the metalloids; (iv) composites of the metals or the metalloids with a carbonaceous material; and (v) composites of a carbonaceous material with the oxides of the metals or the metalloids, but the present invention is not limited thereto.

More specifically, the oxides of the metals or the metalloids may be selected from the group including $SiO_x$, $AlO_x$, $SnO_x$, $SbO_x$, $BiO_x$, $AsO_x$, $GeO_x$, $PbO_x$, $ZnO_x$, $CdO_x$, $InO_x$, $TlO_x$ and $GaO_x$ (herein, $0<x<2$), but the present invention is not limited thereto.

In the present invention, the carbonaceous material may include at least one kind selected from the group including carbon, petroleum coke, activated carbon, carbon nanotube, graphite, and carbon fiber, and the graphite may include natural graphite or artificial graphite, but the present invention is not limited thereto.

There is no limitation in the electrode current collector that may be used in the present invention, as long as it is a highly conductive metal material which has no reactivity within the voltage range of a battery and allows the metal(loid) electrode active material and the electrode binder of the present invention to be easily adhered thereto. Preferably, the electrode current collector may include a conventional anode current collector known in the art. The representative examples of the electrode current collector include copper, aluminum, gold, nickel, and mesh (or foil) fabricated by alloy or combination of the above mentioned materials, but the present invention is not limited thereto. Preferably, copper foil may be used.

The present invention provides an electrode for a secondary battery, which employs the electrode binder for the secondary battery. Specifically, the electrode for the secondary battery in the present invention includes: the electrode binder for the secondary battery, according to the present invention; a metal(loid) electrode active material; and an electrode current collector. Preferably, the electrode binder for the secondary battery, according to the present invention, is an anode binder for the secondary battery, the metal(loid) electrode active material is a metal(loid) anode active material, the electrode current collector is an anode current collector, and the electrode for the secondary battery in the present invention is an anode for the secondary battery.

The electrode for the secondary battery in the present invention may be fabricated by a conventional method known in the art except that the electrode binder for the secondary battery, according to the present invention, is used. For example, the electrode may be fabricated by mixing the electrode binder for the secondary battery of the present invention with the metal(loid) electrode active material, obtaining, as required, a slurry for the electrode through mixing and stirring of a solvent, a conductive material, and a dispersant, and applying the obtained slurry on an electrode current collector made of metal material, followed by compressing and drying.

In the electrode for the secondary battery of the present invention, the electrode binder for the secondary battery and the metal(loid) electrode active material may be included in a ratio of the electrode binder for the secondary battery : the metal(loid) electrode active material = 3~20 parts by weight : 80~97 parts by weight. When the amount of the metal(loid) electrode active material is less than 80 parts by weight, it is impossible to fabricate a high capacity electrode, and on the other hand, when the amount is greater than 97 parts by weight, it is difficult to form an electrode because the metal(loid) electrode active material is separated from an electrode current collector due to the lack of the amount of a binder within the electrode. Also, when the amount of the electrode binder of the present invention is greater than 20 parts by weight, it is difficult to realize a high capacity electrode, and on the other hand, when the amount is less than 3 parts by weight, it is difficult to fabricate an electrode due to the small amount of the binder.

Also, in the electrode for the secondary battery of the present invention, there is no limitation in the amount of the electrode active material and the electrode binder, adhered to unit area of the electrode current collector. For a non-limiting example, in the electrode for the secondary battery of the present invention, the metal(loid) electrode active material and the electrode binder may be applied on the electrode current collector in an amount of 2.3~3.0mg/cm$^2$, and pressed in such a manner that after the fabrication of the electrode, the thickness can be within a range of 15~25$\mu$m, so that the packing density can be within a range of 1.2~1.6g/cc. When the amount of the metal(loid) electrode active material and the electrode binder is less than 2.3mg/cm$^2$, it is impossible to fabricate a high capacity electrode. Also, in a case where a binder having a poor adhesive property, such as PVdF, is applied, since the charge/discharge characteristic can be improved by an increase in the contact area among the metal(loid) electrode active material, the binder, and the electrode current collector through compression, the compression is preferably applied in such a manner that the packing density can be equal to or more than 1.2g/cc.

There is no limitation in the conductive material as long as it is an electronic conductive material which is not chemically changed within a secondary battery. In general, as the conductive material, carbon black, graphite, carbon fiber, carbon nanotube, metal powder, conductive metal oxides, organic conductive materials, or the like may be used. Examples of the currently commercially available conductive material include acetylene black-based materials (commercially available from Chevron Chemical Company or Gulf Oil Company), Ketjen Black EC-based materials (commercially available from Armak Company), Vulcan XC-72 (commercially available from Cabot Company) and super P (commercially available from MMM), and the like. Also, the conductive material may be appropriately used in a weight ratio of 1~30 with respect to the electrode active material.

Non-limiting examples of the solvent that may be used for manufacturing a slurry for the electrode may include organic solvents, such as NMP (N-methyl pyrrolidone), DMF(dimethyl formamide), acetone, dimethyl acetamide, or water, and these solvents may be used alone or in the form of a mixture of two or more thereof. There is no limitation in the use amount of the solvent as long as by the amount, the electrode active material, the electrode binder, and the conductive material can be dissolved and dispersed in consideration of the thickness of the applied slurry and the manufacturing yield.

The secondary battery of the present invention includes a cathode, an anode, a separator, and an electrolyte. The cathode or the anode is an electrode for the secondary battery of the present invention, and includes an electrode binder for the secondary battery, according to the present invention; a metal(loid) electrode active material; and an electrode current collector. Herein, preferably, the electrode for the secondary battery is an anode. Also, the secondary battery of the present invention is preferably a lithium secondary battery, and examples of the secondary battery include a lithium metal secondary battery, a lithium ion secondary battery, a lithium polymer secondary battery, or a lithium ion polymer secondary battery.

The secondary battery of the present invention may be manufactured by a conventional method known in the art by including the electrode manufactured by the electrode binder according to the present invention. For example, the secondary battery may be manufactured by using a conventional cathode known in the art as the cathode, and the electrode for the secondary battery of the present invention as the anode, inserting a porous separator between the cathode and the anode, and injecting an electrolyte.

In the secondary battery of the present invention, in a case where the electrode according to the present invention is used as an anode, there is no limitation in a cathode. The cathode may be manufactured according to a conventional method known in the art in a form where a cathode active material is cohered to a cathode current collector.

As the cathode active material, any type of cathode active material that may be used in a cathode of a conventional secondary battery may be used. Non-limiting examples of the cathode active material may include a lithium transition metal composite oxide such as $LiM_xO_y$ ($M = Co, Ni, Mn, Co_aNi_bMn_c$) (for example, lithium manganese composite oxide such as $LiMn_2O_4$, lithium nickel oxide such as $LiNiO_2$, lithium cobalt oxide such as $LiCoO_2$, lithium iron oxide, oxides obtained by partially substituting Mn, Ni, Co and Fe of the above-mentioned oxides with other transition metals, lithium containing vanadium oxide, etc), chalcogenide (for example, manganese dioxide, titanium disulfide, molybdenum disulfide, etc.), etc. Preferably, the examples include $LiCoO_2$, $LiNiO_2$, $LiMnO_2$, $LiMn_2O_4$, $Li(Ni_aCo_bMn_c)O_2$ ($0<a<1, 0<b<1, 0<c<1, a+b+c=1$), $LiNi_{1-Y}Co_YO_2$, $LiCo_{1-Y}Mn_YO_2$, $LiNi_{1-Y}Mn_YO_2$ (provided that, $0\leq Y<1$), $Li(Ni_aCo_bMn_c)O_4$ ($0<a<2, 0<b<2, 0<c<2, a+b+c=2$), $LiMn_{2-z}Ni_zO_4$, $LiMn_{2-z}Co_zO_4$ (provided that, $0<Z<2$), $LiCoPO_4$, $LiFePO_4$, or a mixture thereof.

As the binder that may be used for manufacturing a cathode, a conventional binder known in the art, such as polytetrafluoroethylene (PTFE), polyvinylidene fluoride (PVdF), etc. may be used. Besides, the electrode binder for the secondary battery, according to the present invention, may be used. Also, non-limiting examples of the cathode current collector may include aluminum, nickel, or mesh (or foil) fabricated by combination of the above mentioned materials.

The electrolyte is a conventional electrolyte known in the art, and may include an electrolyte salt, and an electrolyte solvent.

There is no limitation in the electrolyte solvent as long as the electrolyte solvent is generally used as an organic solvent for the electrolyte. Examples of the electrolyte solvent may include cyclic carbonates, linear carbonates, lactones, ethers, esters, acetonitriles, lactams, ketones, and/or halogen derivatives thereof.

Non-limiting examples of the cyclic carbonates include ethylene carbonate (EC), propylene carbonate (PC), butylene carbonate (BC), fluoroethylene carbonate (FEC) or the like. Non-limiting examples of the linear carbonates include diethyl carbonate (DEC), dimethyl carbonate (DMC), dipropyl carbonate (DPC), ethylmethyl carbonate (EMC), methyl propyl carbonate (MPC), or the like. Non-limiting examples of the lactone include gamma-butyrolactone (GBL). Non-limiting examples of the ether include dibutyl ether, tetrahydrofuran, 2-methyltetrahydrofuran, 1,4-dioxane, 1,2-dimethoxyethane, 1,2-diethoxyethane, or the like. Non-limiting examples of the ester include methyl formate, ethyl formate, propyl formate, methyl acetate, ethyl acetate, propyl acetate, methyl propionate, ethyl propionate, butyl propionate, methyl pivalate, or the like. Also, non-limiting examples of the lactam include N-methyl-2-pyrrolidone (NMP); and non-limiting examples of the ketone include polymethylvinyl ketone. Also, such organic solvents may be used alone or in the form of a mixture of two or more thereof.

There is no particular limitation in the electrolyte salt, as long as the electrolyte salt is generally used for an electrolyte. Non-limiting examples of an electrolyte salt include salts having a structure such as $A^+B^-$, wherein $A^+$ contains an ion selected from among alkaline metal cations, such as $Li^+$, $Na^+$ and $K^+$, and combinations thereof, and $B^-$ contains an ion selected from among anions, such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, and $C(CF_2SO_2)_3^-$, and combinations thereof. Particularly, a lithium salt is preferred. The electrolyte salts may be used alone or in the form of a mixture of two or more thereof.

The secondary battery of the present invention may include a separator. A separator which can be used in the present invention is not limited to any specific separator, but a porous separator is preferred, and non-limiting examples thereof include porous polypropylene, polyethylene or polyolefin separators.

There is no particular limitation in the outer shape of the secondary battery according to the present invention. The secondary battery may be a cylindrical battery using a can, a prismatic battery, a pouch-type battery, or a coin-type battery.

Hereinafter, the present invention will be described in detail with reference to examples. However, the following examples are illustrative only, and the scope of the present invention is not limited thereto.

[Example 1] Test on adhesion force and cohesion force

By using polyacrylonitrile (PAN) as a binder, the following test on the adhesion force and the cohesion force was carried out.

1. Test on the adhesion force between a binder and a current collector

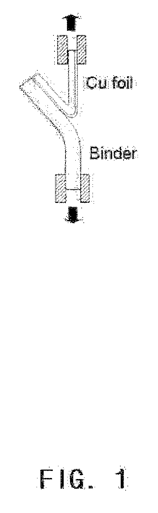

A polyacrylonitrile (PAN) binder having a weight average molecular weight of 1,150,000 was dissolved in N-methyl-2-pyrrolidone (NMP) to obtain an electrode binder solution, and the obtained electrode binder solution was applied on a copper foil film and dried at 120°C for about 6 hours to provide a binder film. The copper foil which has been coated with the binder through the above described method was cut with an interval of 5mm, and was subjected to a 180° peel test as shown in FIG. 1 so as to measure the adhesion force between the binder and the copper foil. The results are noted in Table 1.

2. Test on the cohesion force between an active material and a binder within an electrode

A polyacrylonitrile (PAN) binder having a weight average molecular weight of 1,150,000 was mixed with an anode powder of metal oxide-based SiO-C composite in a ratio of binder: anode powder = 10 parts by weight: 90 parts by weight, and the mixture was introduced in NMP as a solvent and mixed to provide a uniform slurry. Then, the slurry was applied to a copper foil in an amount of 3.78mg/cm$^2$ and the copper foil was roll-pressed in such a manner that the thickness can be $18\mu$m. Then, an anode was obtained. Each of fabricated anodes was cut with an interval of 1cm, and was subjected to a 180° peel test by using Scotch Tape. The results are noted in Table 1.

[Comparative Examples 1 and 2] Test on adhesion force and cohesion force

The test on the adhesion force and the cohesion force was carried out in the same manner as described in Example 1, except that in Comparative Example 1, polyvinylidene fluoride (PVdF) instead of polyacrylonitrile (PAN) was used as a binder, and in Comparative Example 2, polyimide (PI) obtained by polycondensation of 4,4'-Biphthalic anhydride (BPDA) and 4,4'-oxydiphenylene diamine (ODA) was used as a binder. The results are noted in Table 1.

Table 1

| | Kind of binder | Adhesion force N/mm(gf/mm) | Cohesion force N/cm (gf/cm) | Remark |
|---|---|---|---|---|
| Exp. 1 | PAN(1,150,000) | 0.164 (16.7) | 12.10 (1233) | |
| Comp. Exp. 1 | PVdF | 0.00049 (0.05) | 0.834 (85) | |
| Comp. Exp. 2 | PI | 0.729 (74.3) | 13.65 (1391) | Electrode was deformed after charge |

Referring to Table 1, it was found that in Example 1 employing polyacrylonitrile (PAN) (that is, a polymer according to the present invention), the measured results of the adhesion force and the cohesion force were within a range of the present invention. However, it was found that in Comparative Example 1 employing polyvinylidene fluoride (PVdF), the measured results of the adhesion force and the cohesion force were out of the range of the present invention. Also, it was found that in Comparative Example 2 employing polyimide (PI), the adhesion force was out of the range of the present invention and was excessive, and thereby the application of the binder to an electrode caused deformation of the electrode.

[Example 2] Fabrication of secondary battery

Based on a non-aqueous electrolyte solvent (ethylene carbonate (EC): diethyl carbonate (DEC) = 3:7 in a volume ratio), 1M LiPF$_6$ was added to prepare a non-aqueous electrolyte.

Anode powder of a metal oxide-based SiO-C composite, as an anode active material, and polyacrylonitrile (PAN) used in Example 1, as a binder were mixed in a ratio of anode powder: binder = 90 parts by weight: 10 parts by weight, and the mixture was added to NMP to prepare an anode slurry. The anode slurry was coated on a copper foil current collector to provide an anode.

The anode fabricated by the above described method was cut into a circular shape with an area of 1.4875cm$^2$, and was used as a working electrode (anode), and a circular-shaped metal lithium foil was used as a counter electrode (cathode) so as to provide a coin-shaped half cell. Between the working electrode and the counter electrode, a porous polyolefin separator was intervened to manufacture a lithium secondary battery.

[Example 3] Fabrication of secondary battery

The lithium secondary battery was fabricated in the same manner as described in Example 2, except that polyacrylonitrile (PAN) having a weight average molecular weight of 150,000 was used.

[Comparative Examples 3 and 4] Fabrication of secondary battery

The lithium secondary battery was fabricated in the same manner as described in Example 2, except that in Comparative Example 3, polyvinylidene fluoride (PVdF) used in Comparative Example 1, instead of polyacryloritrile (PAN), was used as a binder, and in Comparative Example 4, polyimide (PI) (used in Comparative Example 2) obtained by polycondensation of 4,4'-Biphthalic anhydride (BPDA) and 4,4'-oxydiphenylene diamine (ODA) was used as a binder.

[Experimental Example 1] Performance Test on secondary battery

Each of the secondary batteries obtained from Examples 2 and 3, and Comparative Examples 3 and 4 was charged to 5mV at a rate of 0.1C at 25°C, and charged to a current of 0.005C at 5mV, and then was discharged to 1V at a rate of 0.1C. This charge/discharge was carried out twice. Then, charge/discharge was carried out at 0.5C/0.5C in the same manner as described above. After 50 cycles, the lifetime characteristic of the battery and the increase ratio of thickness of the battery were calculated using equations shown below. The results are noted in Table 2.

$$* \text{ lifetime characteristic (\%)} = 50^{th} \text{ discharge capacity}$$

$$(mAh)/1^{st} \text{ discharge capacity (mAh) x 100}$$

$$* \text{ thickness increase ratio of battery (\%)} = (electrode$$

$$\text{thickness at } 50^{th} \text{ charged state} - \text{electrode thickness before}$$

$$\text{cycle)/ electrode thickness before cycle x 100}$$

Table 2

|  | Kind of binder | lifetime characteristic (%) (50th/1st discharge capacity) | thickness increase ratio of battery (%) (50th charged $\Delta$T) |
|---|---|---|---|
| Exp. 2 | PAN(1,150,0 00) | 96 | 246 |
| Exp. 3 | PAN(150,000 ) | 92 | 280 |
| Comp. Exp. 3 | PVdF | 91 | 333 |
| Comp. Exp. 4 | PI | 98 | Impossible to measure |

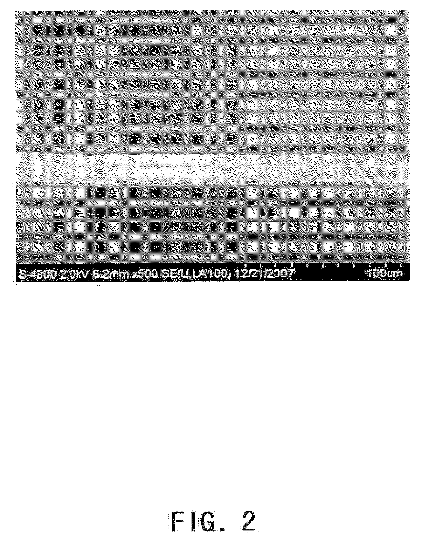

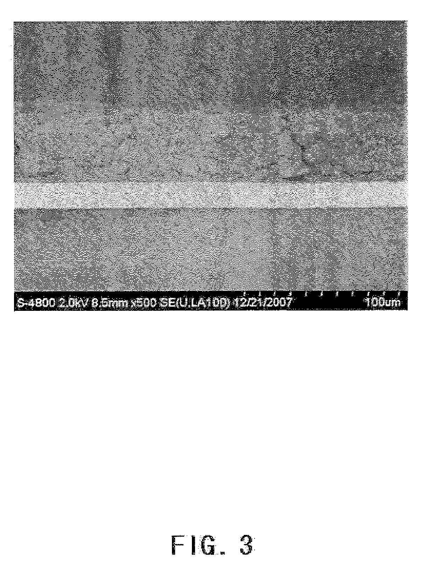

Referring to Table 2, and FIGs. 2 and 3, it can be found that the batteries (from Examples 2 and 3) manufactured by using polyacrylonitrile (PAN) as a binder showed an improved measurement results in the lifetime characteristic and the thickness control, compared to the battery (from Comparative Example 3) employing polyvinylidene fluoride (PVdF). This is because in a case of the batteries from Examples 2 and 3, the adhesion between the anode active material and the anode current collector was stably maintained during charge/discharge cycles, and the cohesion between anode active material particles was improved, thereby reducing the cracks within the anode and controlling the entire thickness of the anode.

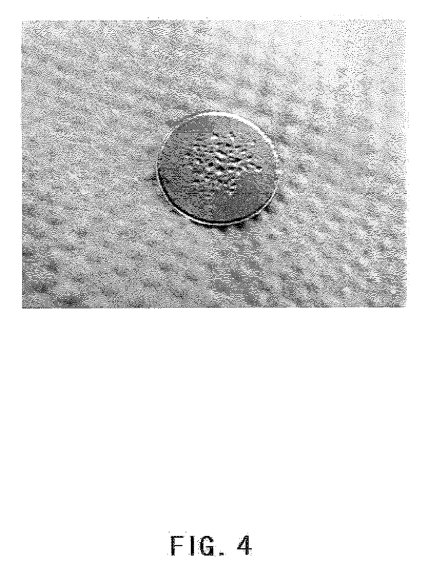

Also, in a case of the battery (from Comparative Example 4) employing polyimide (PI) as a binder, it was found that when the battery was disassembled after the 50th cycle, wrinkles occurred in an electrode (anode) itself (see FIG. 4). Such deformation of the electrode is determined to be caused by an excessive adhesion force between the binder and the current collector. In such a case, the electrode is deformed according to repeated cycles, which is not preferable from the standpoint of the thickness increase of the battery and the safety.

Meanwhile, the battery (from Example 3) employing polyacrylonitrile (PAN) having a weight average molecular weight of 150,000 showed somewhat reduced measurement results in the lifetime characteristic and the thickness control, compared to the battery (from Example 2) employing polyacrylonitrile (PAN) having a weight average molecular weight of 1,150,000. From this result, it can be found that the molecular weight of polyacrylonitrile has an influence on the adhesion force and the electrolyte solution resistance.

Industrial Applicability

According to the present invention, it is possible to inhibit cracks between the metal(loid) electrode active material and the electrode binder of the present invention during charge/discharge, and to inhibit the distances between metal(loid) electrode active materials from becoming more distant from each other. Also, it is possible to configure a stable electrode by an appropriate adhesion force between the electrode binder of the present invention, and the electrode current collector. Accordingly, the secondary battery of the present invention has an advantage in that the lifetime characteristic is improved, and the electrode thickness increase according to the charge/discharge during repeated cycles is inhibited.

## Claims

1.  An electrode for a secondary battery which comprises an electrode binder for a secondary battery, a metal(oid) electrode active material and an electrode current collector,
    wherein the electrode binder is polyacrylonitrile, and
    the electrode is an anode.

2.  The electrode for the secondary battery as claimed in claim 1, wherein the metal(loid) electrode active material is selected from the group including (i) metals or metalloids selected from the group including Si, Al, Sn, Sb, Bi, As, Ge, Pb, Zn, Cd, In, Tl and Ga; (ii) oxides of the metals or the metalloids; (iii) alloys of the metals or the metalloids; (iv) composites of the metals or the metalloids with a carbonaceous material; and (v) composites of the carbonaceous material with the oxides of the metals or the metalloids.

3.  The electrode for the secondary battery as claimed in claim 2, wherein the oxides of the metals or the metalloids are selected from the group including $SiO_x$, $AlO_x$, $SnO_x$, $SbO_x$, $BiO_x$, $AsO_x$, $GeO_x$, $PbO_x$, $ZnO_x$, $CdO_x$, $InO_x$, $TlO_x$ and $GaO_x$ (provided that, 0<x<2).

4.  The electrode binder for the secondary battery as claimed in claim 2, wherein the carbonaceous material is selected from the group including carbon, petroleum coke, activated carbon, carbon nanotube, graphite, and carbon fiber.

5.  The electrode for the secondary battery as claimed in claim 1, wherein the electrode current collector is selected from the group including copper, aluminum, gold, and nickel.

6.  The electrode for the secondary battery as claimed in claim 1, wherein the electrode binder and the metal(loid) electrode active material are included in a ratio of electrode binder: metal(loid) electrode active material = 3-20 parts by weight: 80-97 parts by weight.

7.  The electrode for the secondary battery as claimed in claim 1, which has a packing density within a range of 1.2-1.6g/cc.

8.  A secondary battery comprising a cathode, an anode, a separator, and an electrolyte, wherein the anode is the electrode for the secondary battery as claimed in any one of claims 1 to 7.

9.  The secondary battery as claimed in claim 8, wherein the electrode for the secondary battery has a packing density within a range of 1.2~1.6g/cc.

## Patentansprüche

1.  Elektrode für eine Sekundärbatterie, die ein Elektrodenbindemittel für eine Sekundärbatterie, ein Metall (Metalloid)-Elektrodenaktivmaterial und einen Elektrodenstromkollektor umfasst,

wobei das Elektrodenbindemittel Polyacrylnitril ist und die Elektrode eine Anode ist.

2. Elektrode für eine Sekundärbatterie gemäss Anspruch 1, wobei das Metall (Metalloid)-Elektrodenaktivmaterial aus der Gruppe ausgewählt ist, die (i) Metalle oder Metalloide, ausgewählt aus der Gruppe, die Si, Al, Sn, Sb, Bi, As, Ge, Pb, Zn, Cd, In, Tl und Ga einschliesst; (ii) Oxide der Metalle oder Metalloide; (iii) Legierungen der Metalle oder Metalloide; (iv) Verbundmaterialien der Metalle oder Metalloide mit einem kohlenstoffhaltigen Material; und (v) Verbundmaterialien eines kohlenstoffhaltigen Materials mit den Oxiden der Metalle oder Metalloide einschliesst.

3. Elektrode für eine Sekundärbatterie gemäss Anspruch 2, wobei die Oxide der Metalle oder Metalloide aus der Gruppe ausgewählt sind, die $SiO_x$, $AlO_x$, $SnO_x$, $SbO_x$, $BiO_x$, $AsO_x$, $GeO_x$, $PbO_x$, $ZnO_x$, $CdO_x$, $InO_x$, $TlO_x$ und $GaO_x$ einschliesst (vorausgesetzt, dass $0 < x < 2$).

4. Elektrodenbindemittel für eine Sekundärbatterie gemäss Anspruch 2, wobei das kohlenstoffhaltige Material aus der Gruppe ausgewählt ist, die Kohlenstoff, Petroleumkoks, Aktivkohle, Kohlenstoff-Nanoröhren, Graphit und Kohlenstoffaser einschliesst.

5. Elektrode für eine Sekundärbatterie gemäss Anspruch 1, wobei der Elektrodenstromkollektor aus der Gruppe ausgewählt ist, die Kupfer, Aluminium, Gold und Nickel einschliesst.

6. Elektrode für eine Sekundärbatterie gemäss Anspruch 1, wobei das Elektrodenbindemittel und das Metall (Metalloid) -Elektrodenaktivmaterial in einem Verhältnis von Elektrodenbindemittel : Metall (Metalloid) - Elektrodenaktivmaterial = 3 ~ 20 Gew.-Teile : 80 ~ 97 Gew.-Teile eingeschlossen sind.

7. Elektrode für eine Sekundärbatterie gemäss Anspruch 1, die eine Packdichte innerhalb eines Bereichs von 1,2 ~ 1,6 $g/cm^3$ aufweist.

8. Sekundärbatterie, umfassend eine Kathode, eine Anode, einen Separator und einen Elektrolyten, wobei die Anode die Elektrode für eine Sekundärbatterie gemäss irgendeinem der Ansprüche 1 bis 7 ist.

9. Sekundärbatterie gemäss Anspruch 8, wobei die Elektrode für die Sekundärbatterie eine Packdichte innerhalb eines Bereichs von 1,2 ~ 1,6 $g/cm^3$ aufweist.

**Revendications**

1. Électrode pour une pile rechargeable qui comprend un liant d'électrode pour une pile rechargeable, une matière active d'électrode de métal(loïde) et un collecteur de courant d'électrode,
dans laquelle le liant d'électrode est du polyacrylonitrile, et
l'électrode est une anode.

2. Électrode pour la pile rechargeable selon la revendication 1, dans laquelle la matière active d'électrode de métal(loïde) est sélectionnée à partir du groupe incluant (i) des métaux ou des métalloïdes sélectionnés à partir du groupe incluant Si, Al, Sn, Sb, Bi, As, Ge, Pb, Zn, Cd, In, Tl et Ga ; (ii) des oxydes des métaux ou des métalloïdes ; (iii) des alliages des métaux ou des métalloïdes ; (iv) des composites des métaux ou des métalloïdes avec une matière carbonée ; et (v) des composites de la matière carbonée avec les oxydes des métaux ou des métalloïdes.

3. Électrode pour la pile rechargeable selon la revendication 2, dans laquelle les oxydes des métaux ou des métalloïdes sont sélectionnés à partir du groupe incluant $SiO_x$, $AlO_x$, $SnO_x$, $SbO_x$, $BiO_x$, $AsO_x$, $GeO_x$, $PbO_x$, $ZnO_x$, $CdO_x$, $InO_x$, $TlO_x$ et $GaO_x$ (à condition que $0 < x < 2$).

4. Liant d'électrode pour la pile rechargeable selon la revendication 2, dans lequel la matière carbonée est sélectionnée à partir du groupe incluant carbone, coke de pétrole, charbon actif, nanotube de carbone, graphite et fibre de carbone.

5. Électrode pour la pile rechargeable selon la revendication 1, dans laquelle le collecteur de courant d'électrode est sélectionné à partir du groupe incluant cuivre, aluminium, or et nickel.

6. Électrode pour la pile rechargeable selon la revendication 1, dans laquelle le liant d'électrode et la matière active d'électrode de métal(loïde) sont inclus dans un rapport liant d'électrode : matière active d'électrode de métal(loïde) = 3~20 parties en poids : 80~97 parties en poids.

7. Électrode pour la pile rechargeable selon la revendication 1, qui a une densité d'intégration à l'intérieur d'une plage de 1,2~1,6 g/cm$^3$.

8. Pile rechargeable comprenant une cathode, une anode, un séparateur et un électrolyte, dans laquelle l'anode est l'électrode pour la pile rechargeable selon l'une quelconque des revendications 1 à 7.

9. Pile rechargeable selon la revendication 8, dans laquelle l'électrode pour la pile rechargeable a une densité d'intégration à l'intérieur d'une plage de 1,2~1,6 g/cm$^3$.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007099081 A1
- EP 0964464 A1
- WO 2008030001 A1
- US 2007065720 A1
- US 2007141469 A1